# EUROPEAN PATENT SPECIFICATION

(11) **EP 2 135 798 B1**
(45) Date of publication and mention of the grant of the patent: **03.10.2012**
(21) Application number: 09160681.4
(22) Date of filing: 19.05.2009
(51) Int. Cl.: B62D 21/16, B60K 15/063

(54) **Agricultural utility vehicle comprising a fluid reservoir**
Landwirtschaftliches Arbeitsfahrzeug mit einem Flüssigkeitsbehälter
Vehicule agricole utilitaire comprenant un réservoir de fluide

(30) Priority: 16.06.2008 DE 102008028535
(43) Date of publication of application: 23.12.2009
(73) Proprietor: AGCO GmbH, 87616 Marktoberdorf (DE)
(72) Inventor: Mayr, Stefan, 82386, Huglfing (DE); Mayer, Christoph, 86459, Gessertshausen (DE)
(74) Representative: Morrall, Roger

(56) References cited:
- EP-A1- 0 360 100
- GB-A- 1 024 739
- JP-A- 2002 068 021

## Description

The present invention relates to an agricultural utility vehicle comprising a reservoir for fluid or bulk goods (in the following only fluid is mentioned, however bulk goods are also included), particularly by way of example a tank for fuel or for any fluid such as by way of example liquid manure, water, fertilizer, pesticides etc..

In the case of most utility vehicles with combustion engines the maximum fuel filling capacity depends on engine performance or consumption. As a rule of thumb for each HP of engine performance 2 litres of fuel can or should be carried. This means that in the case of an 80 HP utility vehicle the maximum fuel level in the tank, that is to say, the maximum quantity of fuel that can be carried by the utility vehicle, should not fall below 160 litres. Thus it is guaranteed that the utility vehicle can be operated for at least 10 hours without refuelling. Due to the use of ever more powerful engines even on smaller utility vehicles, more fuel must also be carried. The space for installing a fluid reservoir, in particular a fuel tank, however is limited.

Vehicles in which a or one of the fuel tanks is provided under a vehicle hood are known. The space for a fuel tank is limited by the sub-assemblies in this region, such as for example an engine and a cooler. Furthermore due to manufacturing tolerances, assembly inaccuracies and free spaces for moving parts such as the hood an air gap has to be maintained between the vehicle hood and the fuel tank as a result of which further installation space is lost.

JP 2002-068021 A discloses an agricultural utility vehicle comprising a fluid reservoir and a moveable vehicle hood, wherein an outer contour of the fluid reservoir forms at least one part of the outer contour of the agricultural utility vehicle and wherein said outer contour of the fluid reservoir forms at least one part of a vehicle hood.

The object of the present invention is to provide an as large as possible fluid reservoir in the front region of a vehicle which solves the problems of little installation space defined above. Advantageously the external dimensions and optics of the vehicle should not to be altered as a result.

The object is achieved by an agricultural utility vehicle comprising a fluid reservoir according to Claim 1. Further embodiments of the invention are indicated in the sub-claims.

A fluid reservoir of a vehicle according to the invention is designed in such a way that its outer contour forms at least one part of a vehicle hood in the front region of the vehicle and thus a front part of the vehicle. In this way the air space required for tanks provided under the vehicle hood, between tank and vehicle hood, as well as the redundant wall thickness of the vehicle hood, can be used as additional tank capacity. At the same time, optical changes as well as an increase in the external dimensions are avoided, since the outer contour of the tank is aligned with the outer contour of the vehicle hood. Furthermore the handling of the remaining smaller vehicle hood is facilitated and the production more economical. The fluid reservoir, on its side turned towards the driver's cab, has a sealing surface, which can be brought into contact with a seal of the vehicle hood. In this way, it is guaranteed that air sucked in from the environment is always exhausted through the hood grilles of the vehicle hood and thus particles above a certain size cannot ingress into the interior to the coolers. Thus the heat exchangers are prevented from becoming dirty and their efficiency prevented from falling. Optically therefore only an edge profile is still visible between the fluid reservoir and the vehicle hood. The fluid reservoir is optically homogeneously incorporated into the overall system.

Advantageously, the outer contour of the fluid reservoir forms an air inlet contour for one or more coolers. These contours can be cast directly during production at the desired place and in the desired form, for example during the rotation casting process. The vehicle hood according to the invention is formed in two pieces. The front part, that is to say, the fluid reservoir, contrary to the sculptured surface of the remaining vehicle hood is formed three-dimensionally and also extends inside the engine and cooler area. Since the fluid reservoir and therefore the air inlet channels extend up to the height level of the cooler, the side, pointing towards the driver's cab, of the fluid reservoir can be designed in a fluidically optimum way without large cost. The optimized and precisely adjustable air supply to the coolers, resulting therefrom, substantially improves the efficiency of the cooling system.

Advantageously, devices such as headlights, a company name, a company logo, number plate brackets or a vehicle hood lock for example are attached to the outer contour of the fluid reservoir. In this way complex framework or additional constructions are avoided. The attachment points for the devices to be fitted are simply manufactured during production, in the rotation casting process for example, of the fluid reservoir. The manufacturing costs, as well as assembly costs can be substantially reduced in this way.

Further features and advantages of the invention result from the description of exemplary embodiments on the basis of the appended drawings. In the figures there are shown:
Fig. 1 a total view of a vehicle,
Fig. 2 a side view of a hood upper part,
Fig. 3 a side view of a fluid reservoir and a vehicle hood,
Fig. 4 a detail view of the region A from Fig. 3,
Fig. 5a a side view of the fluid reservoir,
Fig. 5b a perspective view of the fluid reservoir,
Fig. 5c a plan view of the fluid reservoir,
Fig. 5d a sectional view C-C (from Fig. 5a) of the fluid reservoir,
Fig. 5e a sectional view D-D (from Fig. 5c) of the fluid reservoir,
Fig. 5f a detail view of a hood attachment,
Fig. 6a a plan view of the fluid reservoir and a cooler,
Fig. 6b a sectional view B-B (from Fig. 6a) of the fluid reservoir,
Fig. 6c a further sectional view of the fluid reservoir and the cooler,
Fig. 7 a sectional view E-E (from Fig. 5d) of the fluid reservoir.

With reference to the figures a first embodiment of the present invention is described below.

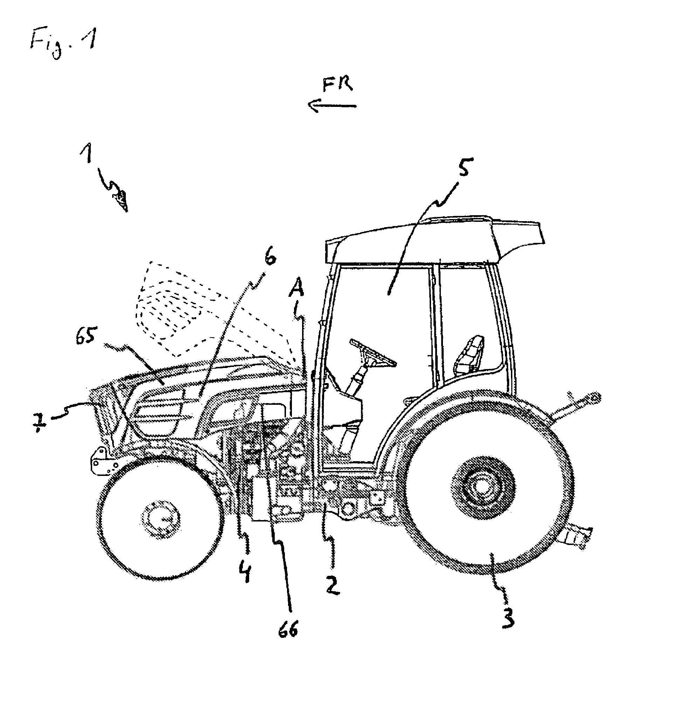

Fig. 1 shows a vehicle 1 with a chassis 2, wheels 3, an engine region 4, a driver's cab 5, a vehicle hood 6 and a fluid reservoir 7 or tank 7. The arrow FR indicates the driving direction of the vehicle 1. With respect to the driving direction the tank 7 in the embodiment shown is fitted in front of the vehicle hood 6. The vehicle hood 6 consists of a moving hood upper part 65, substantially U-shaped in the driving direction, which as illustrated by a dotted line in Fig. 1, can be pivoted about the axis A into a raised position, and consists of two non-pivoting hood lower parts 66, which are arranged on both sides of the vehicle 1.

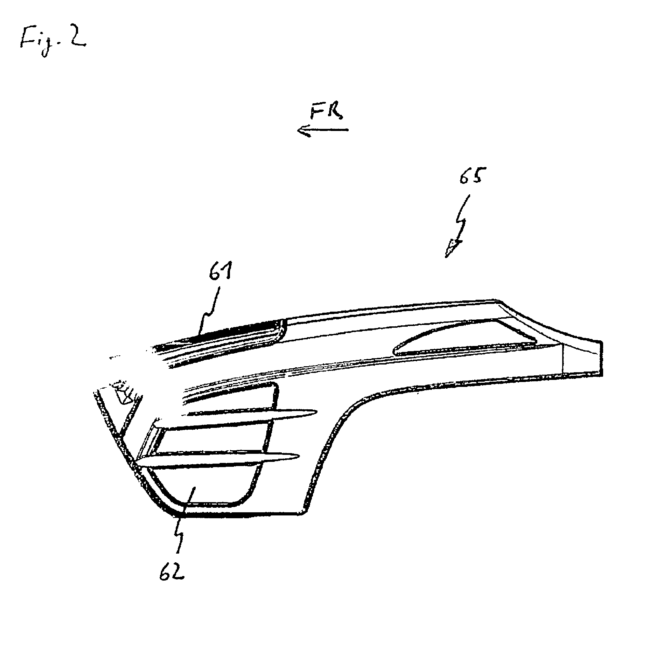

Fig. 2 shows the hood upper part 65 with a hood upper grille 61 and a hood side grille 62, two hood side grilles 62 being provided in total.

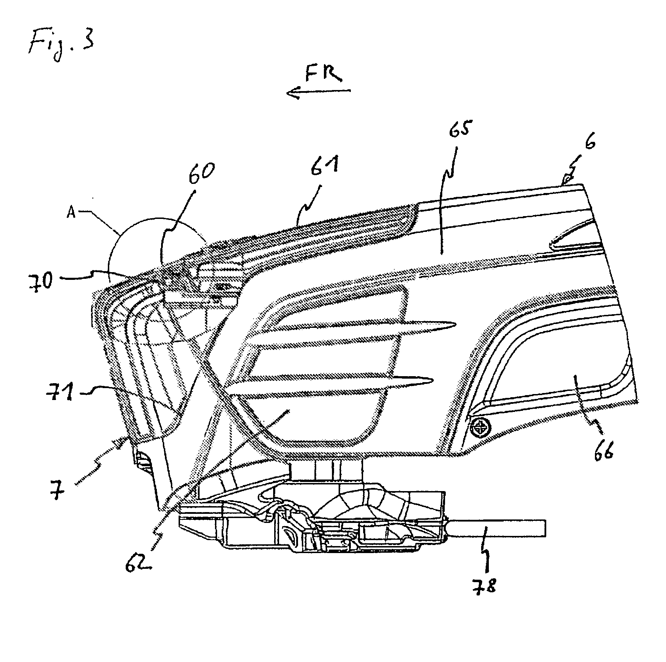

Fig. 3 shows the tank 7 with a fuel return pipe 78 and the vehicle hood 6 with the hood upper part 65 and the hood lower part 66 of the vehicle 1. The tank 7 in the driving direction FR is configured slightly diagonally forwards in the front region of the vehicle 1, in order to gain extra fuel capacity having regard to adjacent components in the lower region. The vehicle hood 6 is attached directly behind the tank 7, that is to say, against the driving direction FR. In order to lend the tank 7 the appearance of a continuous vehicle hood 6, an edge profile 71 is provided on both sides of the tank 7, which is flush with the vehicle hood outer contour. The outer contour of the hood upper part 65, in the direction of the tank 7, is provided with a first seal 60. The outer contour of the tank 7, which points towards the driver's cab 5 (see Fig.
1) or the vehicle hood 6, is provided with a surrounding sealing surface 70, which abuts the seal 60 of the hood upper part 65. The sealing surface 70 and the line of the seal 60 of the two components have the same contour and in the installed condition lie closely on top of one another.

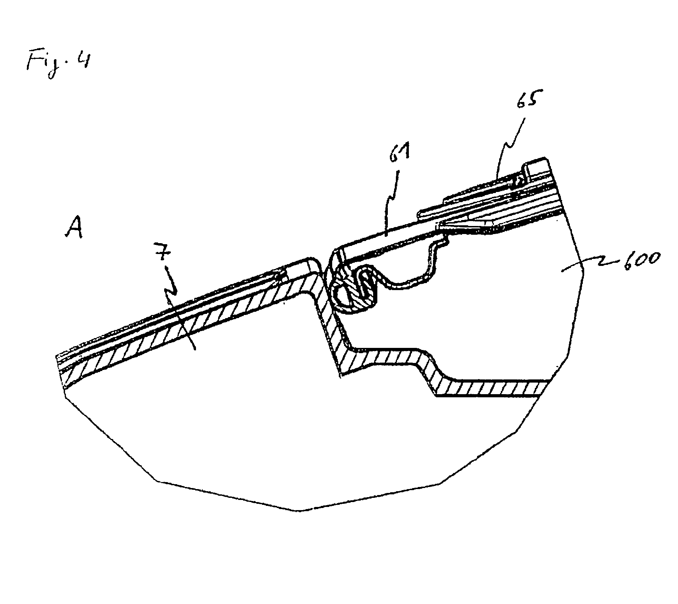

Fig. 4 shows the section (A), indicated in Fig. 3 by a circle, of the tank 7 or the vehicle hood 6. The hood upper grille 61 and the two lateral hood side grilles 62 (see Fig. 3), through which ambient air is sucked in and fed to a hood interior 600 are provided in the hood upper part 65. The hood grilles 61, 62 consist for example of moulded perforated plates with perforations of approx. 1-2 mm. Thus it is ensured that larger particles, such as blades of grass for example whirled into the air during mowing operations, are kept away. The hood interior 600 is sealed by sealing the tank 7 by means of the seal 60 and ambient air can only ingress into the hood interior 600 through the hood grilles 61, 62.

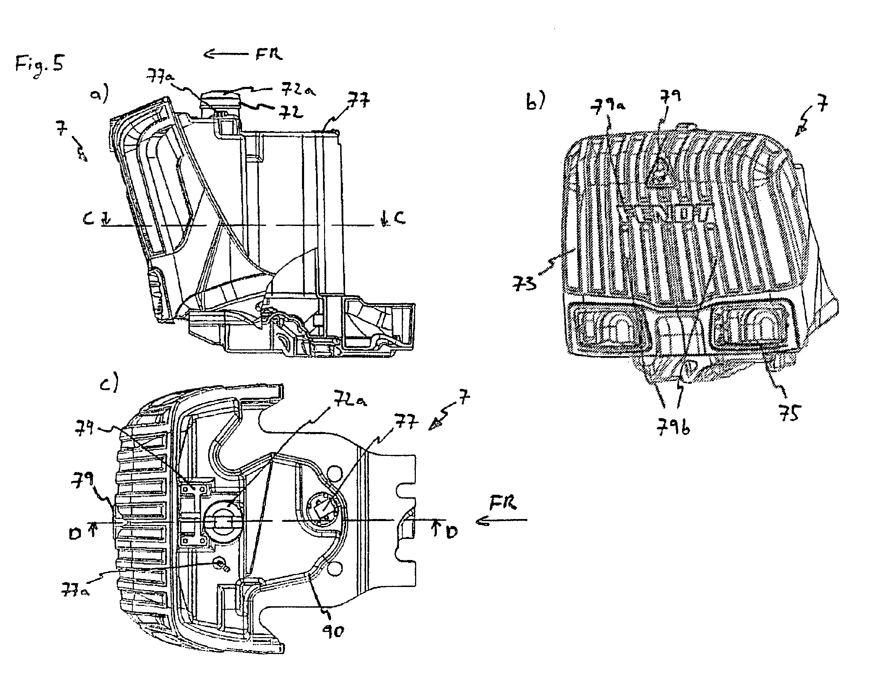

Fig. 5a shows the tank 7 with a filling spout 72, a tank cap 72a and a tank level gauge 77, which can also contain a (not illustrated) discharge pump, in a side view.

Fig. 5b shows the tank 7 in a perspective view. External fins 73 which are designed to reinforce the vehicle hood optics of the tank 7 are recognizable there. Headlight attachments 75 are provided in the lower region of the tank 7 for fitting headlights. A company logo 79 and a nameplate 79a (FENDT) are also provided. Moreover two mounting holes 79b are provided for fixing a number plate.

Fig. 5c shows the tank 7 in a plan view. A vehicle hood clasp 74 or a hood lock serves to securely close the vehicle hood 6 (see Fig. 3). Fuel is returned to the tank 7 via a fuel return pipe 77a. The tank 7 extends out of the viewing angle shown in an approximate semicircle towards the vehicle hood 6 (see Fig. 3), in order to further increase the filling capacity. The outer contour of this section forms an air inlet contour 90, through which cooling air flows.

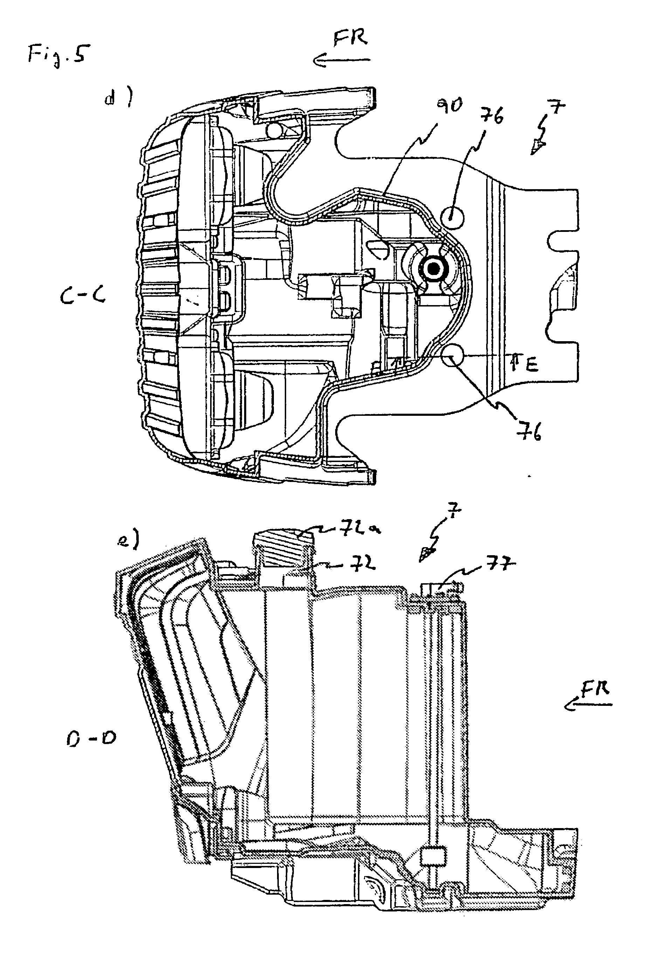

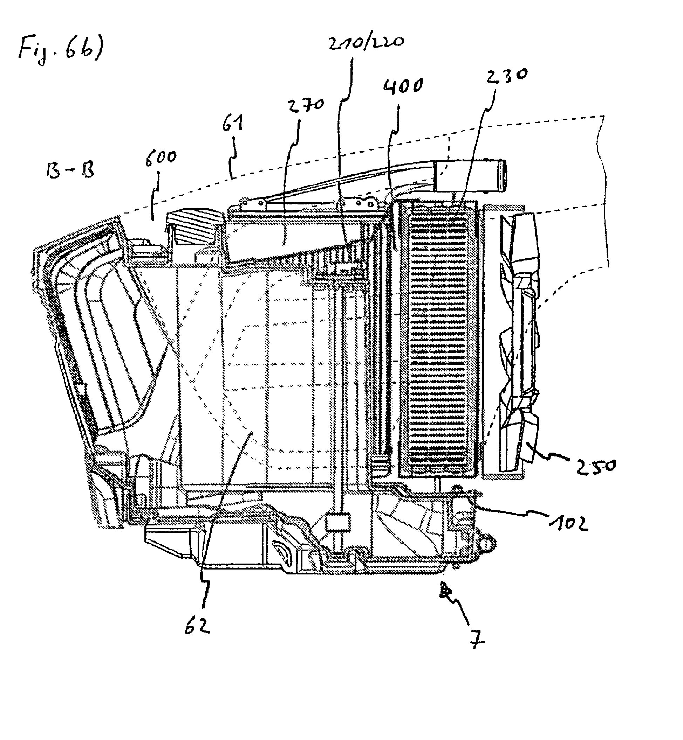

Fig. 5d shows a horizontal section CC (see Fig. 5a) through the tank 7. Passages 76 which are used to attach the tank 7 to the vehicle 1 or chassis 2 are formed in the tank 7 (see Fig. 1) and are described more closely in Fig. 6b.

Fig. 5e shows a vertical section D-D (see Fig. 5c) through the tank 7.

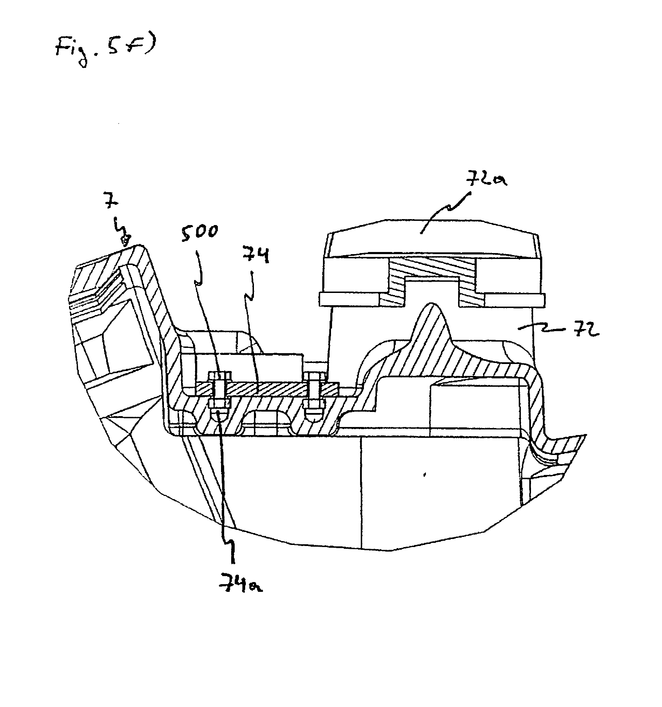

Fig. 5f by way of example shows the attachment of the vehicle hood clasp 74. Threaded bushes 74a are formed secure against rotation in the tank 7 (see Fig. 3) during its production, by means of which the hood clasp 74 can be connected to the tank 7 via screws 500. Other attachment places, which are provided directly in the tank 7, are also arranged accordingly.

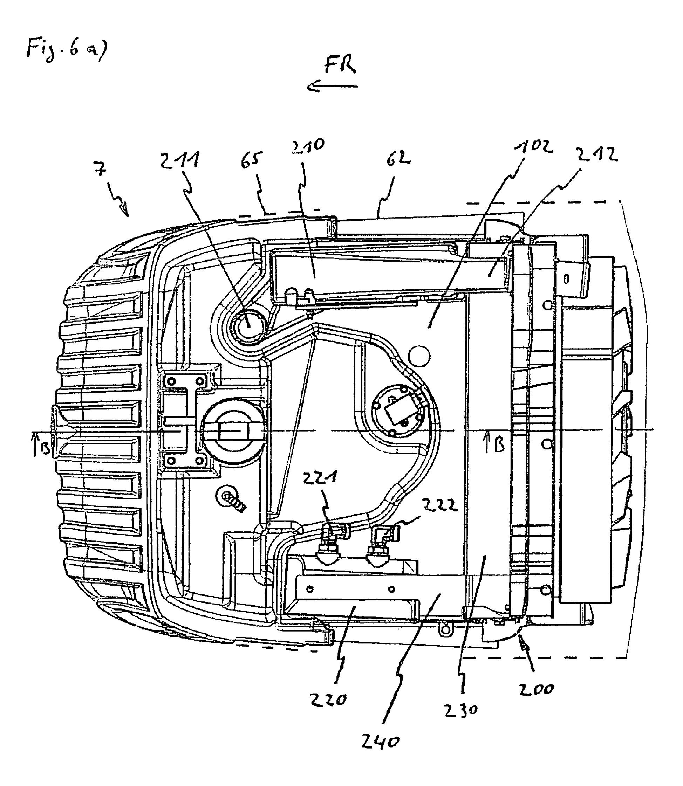

Fig. 6a shows the tank 7 and a cooler 200 in a plan view. The cooler 200 substantially consists of a cooling fan 250 (see Fig. 6b) and a first heat exchanger 210, a second heat exchanger 220, a third heat exchanger 230. All components of the cooler 200 are fitted to a bearer plate 102. The first heat exchanger 210 is arranged on the right laterally in the driving direction FR and is provided for cooling the hot combustion air, the combustion air being ducted in or out via ports 211 and 212. The second heat exchanger 220 is arranged opposite the first heat exchanger 210, has ports 221 and 222 and is provided for cooling the transmission and hydraulic oil. The flow through the first heat exchanger 210 and the second heat exchanger 220 in this view is from left and right. The third heat exchanger 230 is arranged in front of the cooling fan 250, its ports not being visibly illustrated. The flow through the third heat exchanger 230 is in the driving direction FR.

While the first heat exchanger 210 closely joins the third heat exchanger 230, a gap which in operation is tightly sealed by a maintenance plate 240 is provided between the third heat exchanger 230 and the second heat exchanger 220. The maintenance plate 240 is removed for cleaning the cooler 200. The driver can clean the heat exchanger surfaces through the gap, for example by using a brush or high pressure cleaning equipment. The first and second heat exchangers 210, 220 towards the tank 7 are provided with a sealing strip, so that no airflow is possible through the gap and the air flows completely through the heat exchangers 210, 220, 230. Likewise the heat exchangers 210, 220, 230 are sealed downwards towards the bearer plate 102, so that no inadmissible gap can also develop here.

Fig. 6b shows a vertical longitudinal section B-B (see Fig. 6a) through the tank 7. The tank 7 extends underneath the cooler 200 (see Fig. 6a). All components of the cooler 200 are fitted on the bearer plate 102. As a result of the vacuum, which is generated by the cooling fan 250, ambient air is sucked into the hood interior 600 through the hood upper grille 61 shown as a dotted line and the hood side grilles 62 shown as a dotted line. The air sucked in through the hood upper grille 61 can only flow to a small extent directly via a cooler interior 400 into the heat exchanger 230 because this is diverted by an air deflector panel 270 in such a manner that the majority of the air volume must first flow through the two lateral heat exchangers 210, 220. The air, which flows in through the hood side grilles 62, likewise flows through the lateral heat exchangers 210, 220, before this reaches the cooler interior 400 and from there can arrive at the third heat exchanger 230.

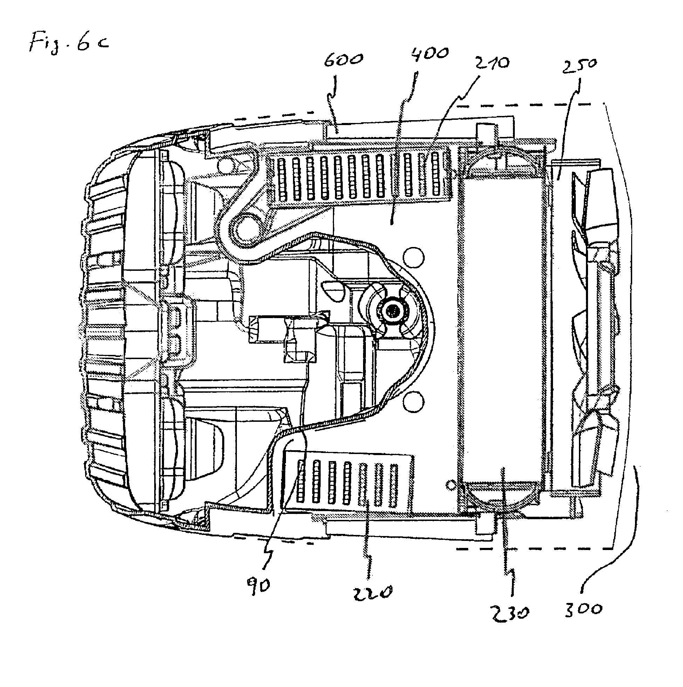

Fig. 6c shows a horizontal longitudinal section through the tank 7. Since the ambient air which flows into the hood interior 600 via the hood grilles 61, 62 (see Fig. 6b) flows through the first and second heat exchangers 210, 220 almost perpendicularly to the inflow direction of the third heat exchanger 230, the air in the cooler interior 400 must be diverted by approx. 90°. In order to prevent air turbulence arising and thus efficiency losses, the air must be directed in a controlled manner. For this purpose the tank 7 in the region between the first and second heat exchanger 210, 220 is provided with an air inlet contour 90 continuously tapering towards the third heat exchanger 230, so that on the one hand a largest possible tank capacity results and on the other hand the air is diverted free from turbulence.

As a result of the arrangement and sealing of the heat exchangers 210, 220, 230 with the tank 7, the bearer plate 102 and the air deflector panel 270 described in Fig. 6a, b, c, it is guaranteed that a cooler interior 400 is formed on the inside of these components, in which ambient air only enters via the heat exchangers 210, 220 and, through the third heat exchanger 230 and the fan, can be exhausted to an engine compartment 300 lying behind them in the driving direction FR.

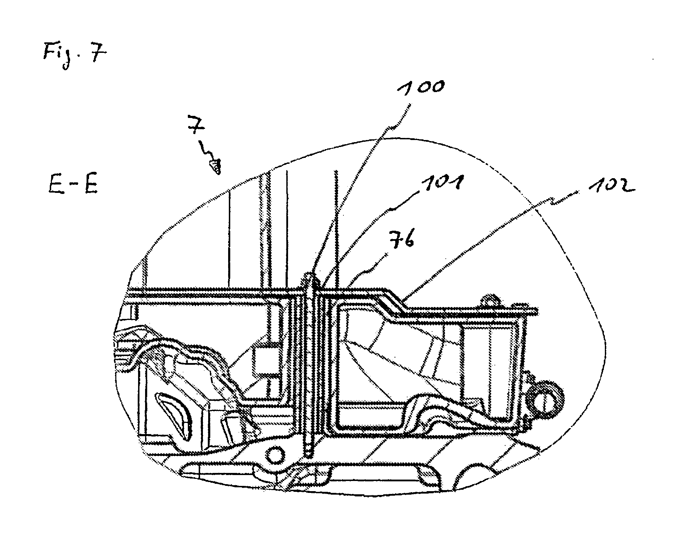

Fig. 7 with the section E-E (see Fig. 5d) shows the attachment of the tank 7 to the chassis 2. Passages 76 which pass through the enclosed volume, without opening this so that no fluid can escape, are provided in the tank 7. Tie rods 100 and a spacer sleeve 101 are screwed into the chassis 2 through these passages 76. The bearer plate 102, provided on the upper side of the tank 7, on the one hand distributes the pre-tensioning forces over a wide area to the tank 7 and in addition forms an even, closed surface, which serves to seal the surrounding components of the cooler 200 (see Fig. 6a), facilitates cleaning and permits homogeneous air circulation.

In the embodiment described above, the second heat exchanger is provided for cooling the transmission and hydraulic oil, since both devices are supplied by the same oil circuit. In addition, it is conceivable that transmission and hydraulics (lifting gear etc.) can have a separate, independent oil system and thus are not cooled in one heat exchanger. Furthermore it is possible that in the case of vehicles with air conditioning for the driver's cab a further heat exchanger is necessary.

Therefore if a further heat exchanger must be provided in the cooling system it is possible to accommodate, at the position of the air deflector panel, a further horizontal heat exchanger. The air inlet contour of the tank would then have to be designed more steeply downwards towards the rear depending upon the design of the cooling system, since air flowing from top to bottom through the additional heat exchanger must be directed in an optimum way.

## Claims

1. An agricultural utility vehicle (1) comprising a fluid reservoir (7) and a moveable vehicle hood (6), wherein an outer contour (71) of the fluid reservoir forms at least one part of an outer contour of the front of the vehicle (1) and at least one part of the vehicle hood (6) wherein the outer contour (71) of the fluid reservoir (7) has a sealing surface (70) which can be brought into contact with a seal (60) of the vehicle hood (6) when the hood (6) is in a closed position.

2. Agriculural utility vehicle (1) according to claim 1, **characterized in that** the outer contour (71) of the fluid reservoir (7) forms an air inlet contour (90) for a cooler (81, 82, 83).

3. Agriculural utility vehicle (1) according Claim 1 or 2, **characterized in that** the outer contour (71) of the fluid reservoir (7) is suitable for attaching devices.

4. Agriculural utility vehicle (1) according to Claim 3, **characterized in that** the device is a headlight.

5. Agriculural utility vehicle (1) according to Claim 3, **characterized in that** the device is a vehicle hood lock.

6. Agriculural utility vehicle (1) according to Claim 3, **characterized in that** the device is a number plate bracket.

## Patentansprüche

1. Landwirtschaftliches Nutzfahrzeug (1) mit einem Flüssigkeitsbehälter (7) und einer beweglichen Fahrzeughaube (6), wobei eine Außenkontur (71) des Flüssigkeitsbehälters mindestens einen Teil einer Außenkontur der Frontpartie des Fahrzeugs (1) und mindestens einen Teil der Fahrzeughaube (6) bildet, wobei die Außenkontur (71) des Flüssigkeitsbehälters (7) eine Dichtfläche (70) hat, die mit einer Dichtung (60) der Fahrzeughaube (6) in Kontakt gebracht werden kann, wenn die Haube (6) in einer Geschlossenstellung ist.

2. Landwirtschaftliches Nutzfahrzeug (1) nach Anspruch 1, **dadurch gekennzeichnet, dass** die Außenkontur (71) des Flüssigkeitsbehälters (7) eine Lufteinlasskontur (90) für einen Kühler (200) bildet.

3. Landwirtschaftliches Nutzfahrzeug (1) nach Anspruch 1 oder 2, **dadurch gekennzeichnet, dass** die Außenkontur (71) des Flüssigkeitsbehälters (7) zum Anbringen von Vorrichtungen geeignet ist.

4. Landwirtschaftliches Nutzfahrzeug (1) nach Anspruch 3, **dadurch gekennzeichnet, dass** die Vorrichtung ein Frontscheinwerfer ist.

5. Landwirtschaftliches Nutzfahrzeug (1) nach Anspruch 3, **dadurch gekennzeichnet, dass** die Vorrichtung ein Fahrzeughaubenschloss ist.

6. Landwirtschaftliches Nutzfahrzeug (1) nach Anspruch 3, **dadurch gekennzeichnet, dass** die Vorrichtung ein Nummernschildhalter ist.

## Revendications

1. Véhicule utilitaire agricole (1) comprenant un réservoir de fluide (7) et un capot de véhicule mobile (6), dans lequel un contour externe (71) du réservoir de fluide forme au moins une partie d'un contour externe de l'avant du véhicule (1) et au moins une partie du capot de véhicule (6), dans lequel le contour externe (71) du réservoir de fluide (7) présente une surface d'étanchéité (70) qui peut être mise en contact avec un joint (60) du capot de véhicule (6) lorsque le capot (6) est dans une position fermée.

2. Véhicule utilitaire agricole (1) selon la revendication 1, **caractérisé en ce que** le contour externe (71) du réservoir de fluide (7) forme un contour d'entrée d'air (90) pour un radiateur (81, 82, 83).

3. Véhicule utilitaire agricole (1) selon la revendication 1 ou 2, **caractérisé en ce que** le contour externe (71) du réservoir de fluide (7) permet d'assurer la fixation de dispositifs.

4. Véhicule utilitaire agricole (1) selon la revendication 3, **caractérisé en ce que** le dispositif est un phare.

5. Véhicule utilitaire agricole (1) selon la revendication 3, **caractérisé en ce que** le dispositif est une serrure de capot de véhicule.

6. Véhicule utilitaire agricole (1) selon la revendication 3, **caractérisé en ce que** le dispositif est un support de plaque minéralogique.
